(19) Europäisches Patentamt
European Patent Office
Office européen des brevets

(11) **EP 4 396 567 B1**

(12) **EUROPEAN PATENT SPECIFICATION**

(45) Date of publication and mention
of the grant of the patent:
**13.05.2026 Bulletin 2026/20**

(21) Application number: **22768942.9**

(22) Date of filing: **05.08.2022**

(51) International Patent Classification (IPC):
***G01N 25/72*** *(2006.01)*

(52) Cooperative Patent Classification (CPC):
**G01N 25/72**

(86) International application number:
**PCT/IB2022/057295**

(87) International publication number:
**WO 2023/031704 (09.03.2023 Gazette 2023/10)**

(54) **IMAGE ACQUISITION APPARATUS, INSPECTION APPARATUS, AND IMAGE ACQUISITION METHOD**

BILDERFASSUNGSVORRICHTUNG, INSPEKTIONSVORRICHTUNG UND
BILDERFASSUNGSVERFAHREN

APPAREIL D'ACQUISITION D'IMAGE, APPAREIL D'INSPECTION ET PROCÉDÉ D'ACQUISITION
D'IMAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.08.2021 JP 2021141840**

(43) Date of publication of application:
**10.07.2024 Bulletin 2024/28**

(73) Proprietor: **Ricoh Company, Ltd.**
**Tokyo 143-8555 (JP)**

(72) Inventors:
• **MASUDA, Koji**
**Tokyo 143-8555 (JP)**
• **HINO, Makoto**
**Tokyo 143-8555 (JP)**
• **HIRAKAWA, Makoto**
**Tokyo 143-8555 (JP)**

(74) Representative: **Marks & Clerk LLP**
**15 Fetter Lane**
**London EC4A 1BW (GB)**

(56) References cited:
WO-A2-2015/140797      JP-A- 2001 249 096
JP-A- 2006 337 232      JP-A- 2017 067 549
JP-A- 2020 041 840      JP-A- 2020 169 821
US-A1- 2008 302 707

# Description

[Technical Field]

The present disclosure relates to an image acquisition apparatus, an inspection apparatus, and an image acquisition method.

[Background Art]

A package inspection apparatus for inspecting a package including a content such as food inside the package by sealing the package is known The inspection apparatus inspects a sealing portion of the package to check whether the sealing portion is correctly sealed or not.

For example, an apparatus for inspecting a sealing failure of a package is disclosed in PLT1. The configuration of the apparatus includes an inspection means for detecting a failure of a sealing portion based on temperature of the package by heating the package using a heat means.

[Citation List]

[Patent Literature]

[PTL 1]
Japanese Unexamined Patent Application Publication No. 2020-041840.
WO-A-2015/140797 discloses methods and systems for determining integrity of a package. US-A-2008/302707 discloses an automatic process and machine for inspecting and sorting non-metallic objects.
JP-A-2017067549 discloses an article inspection device capable of inspecting an entire seal area of an object under inspection.

[Summary of Invention]

[Technical Problem]

However, in the conventional inspection apparatus for a package, since a heat source is used to increase the temperature of the package, handling of the heat source is complicated in terms of safety, and heat generated from the heat source adversely affects peripheral members.
An aim of the present invention is to acquire a high-quality thermal image without causing adverse thermal effects on the peripheral members.

[Solution to Problem]

The invention is set out in independent apparatus claim 1 and corresponding method claim 8. Further embodiments are defined by the dependent claims.

[Advantageous Effects of Invention]

According to the embodiments of the present invention, a high-quality thermal image can be acquired without causing adverse thermal effects on the peripheral members.

[Brief Description of Drawings]

The accompanying drawings are intended to depict example embodiments of the present invention and should not be interpreted to limit the scope thereof. The accompanying drawings are not to be considered as drawn to scale unless explicitly noted. Also, identical or similar reference numerals designate identical or similar components throughout the several views.

[FIG. 1]

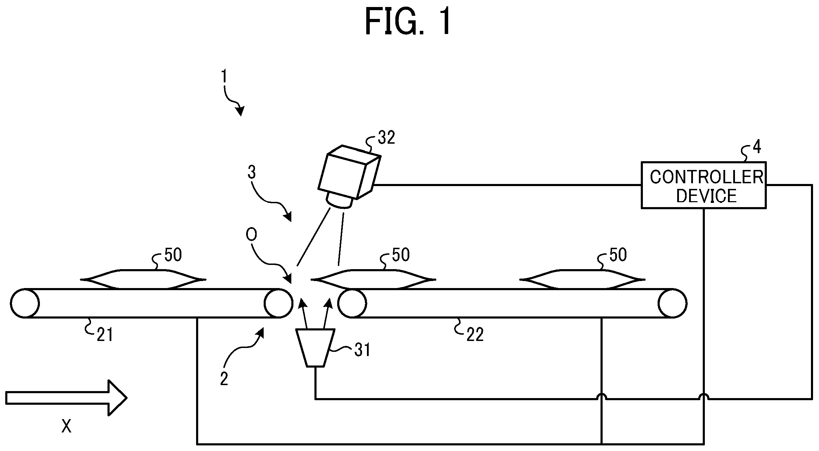

FIG. 1 is a diagram of a configuration of an inspection apparatus according to an embodiment:

[FIG. 2]

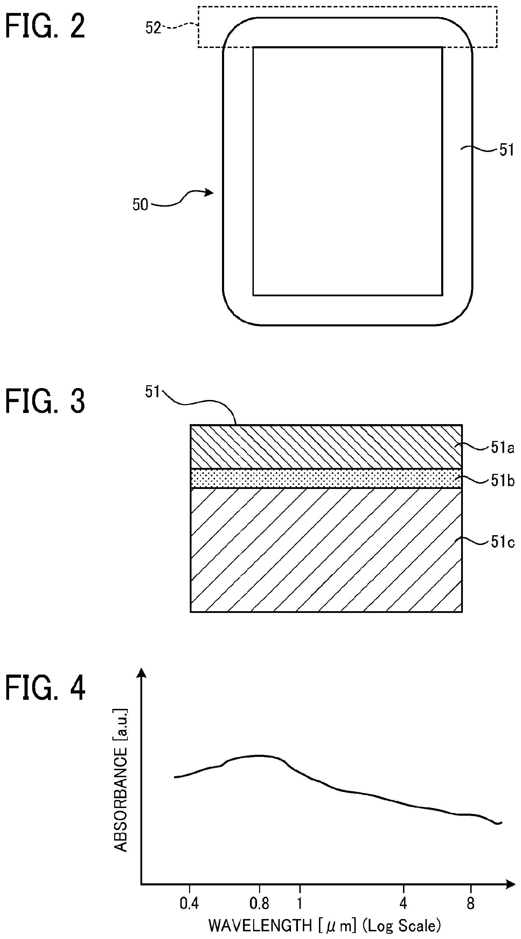

FIG. 2 is a diagram of a package to be inspected by the inspection apparatus;

[FIG. 3]
FIG. 3 is a diagram of a configuration of the package material;

[FIG. 4]
FIG. 4 is a graph of the absorbance of aluminum;

[FIG. 5]

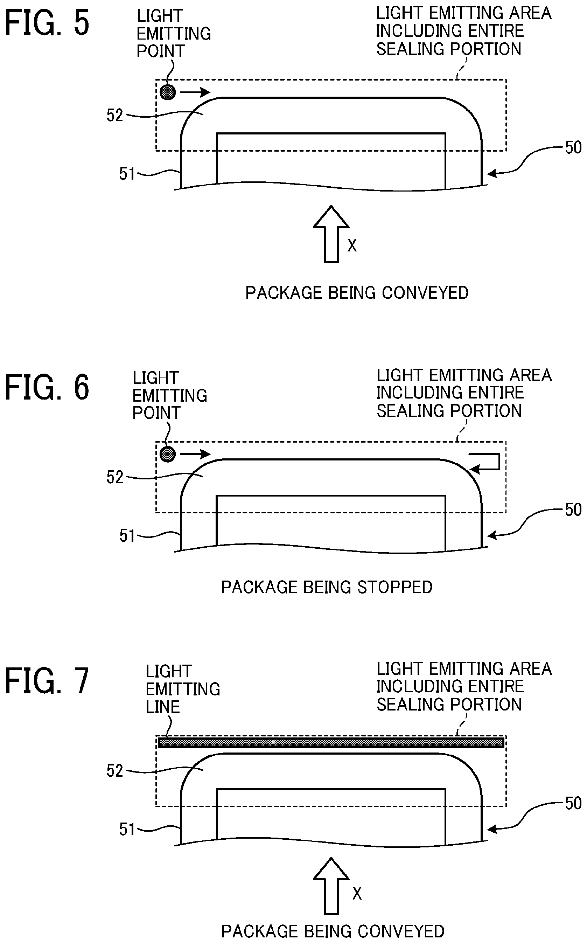

FIG. 5 is a diagram of a point light source to emit light on the package being conveyed;

[FIG. 6]
FIG. 6 is a diagram of a point light source to emit light on the package being stopped;

[FIG. 7]
FIG. 7 is a diagram of a line light source to emit light on the package being conveyed;

[FIG. 8]

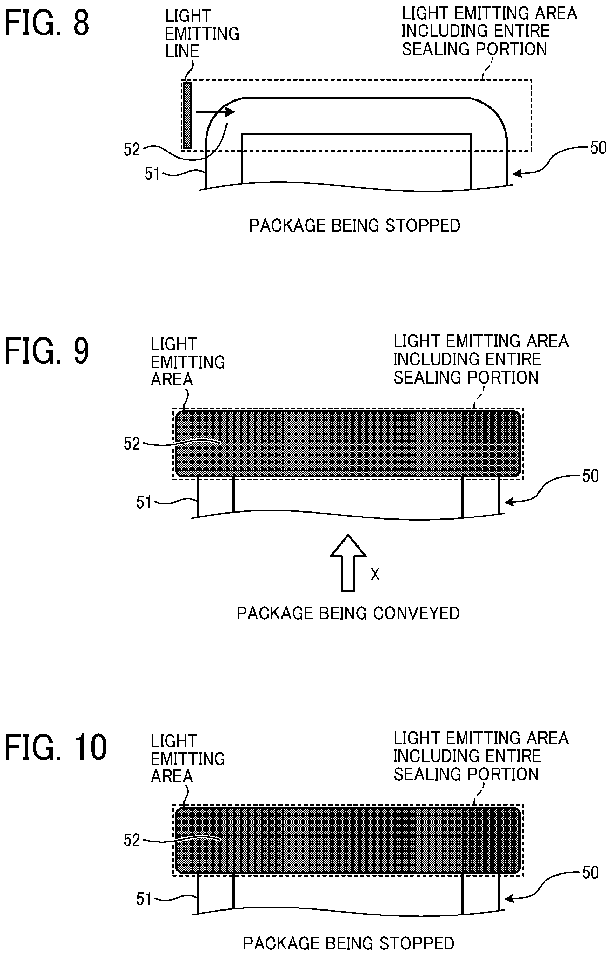

FIG. 8 is a diagram of a line light source to emit light on the package being stopped;

[FIG. 9]
FIG. 9 is a diagram of an area light source to emit light on the package being conveyed;

[FIG. 10]
FIG. 10 is a diagram of an area light source to emit light on the package being stopped;

[FIG. 11]

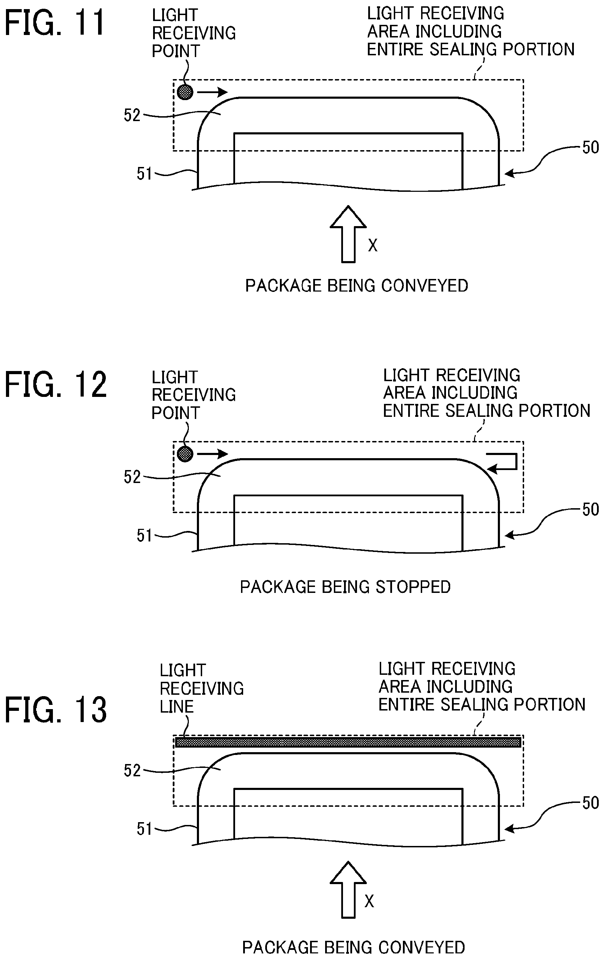

FIG. 11 is a diagram of a point light receiving element to receive thermal radiation from the package being conveyed;

[FIG. 12]
FIG. 12 is a diagram of a point light receiving element to receive thermal radiation from the package being stopped;

[FIG. 13]
FIG. 13 is a diagram of a line light receiving element to receive thermal radiation from the package being conveyed;

[FIG. 14]

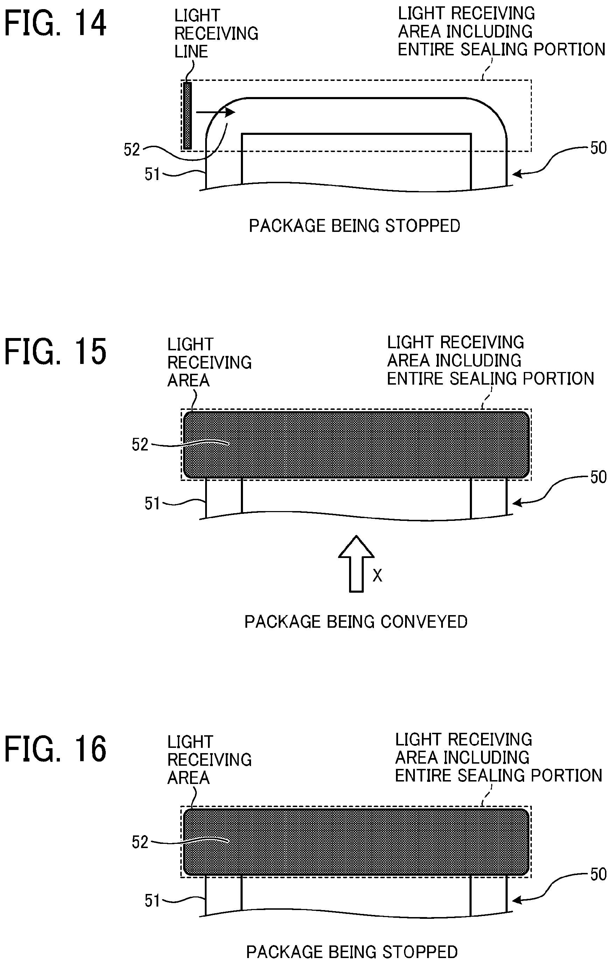

FIG. 14 is a diagram of a line light receiving element to receive thermal radiation from the package being stopped;

[FIG. 15]
FIG. 15 is a diagram of an area light receiving element to receive thermal radiation from the package being conveyed;

[FIG. 16]
FIG. 16 is a diagram of an area light receiving element to receive thermal radiation from the package being stopped;

[FIG. 17]

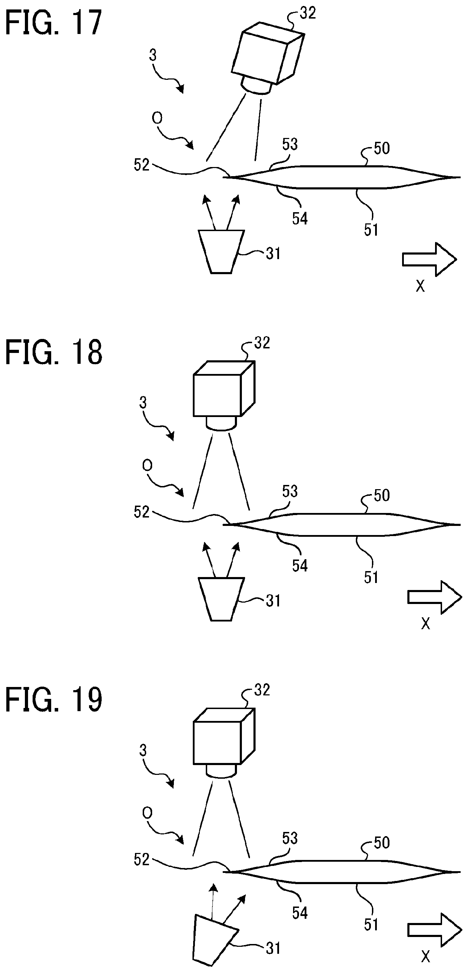

FIG. 17 is a diagram of a first layout of the light emitting unit and the light receiving unit;

[FIG. 18]
FIG. 18 is a diagram of a second layout of the light emitting unit and the light receiving unit;

[FIG. 19]
FIG. 19 is a diagram of a third layout of the light emitting unit and the light receiving unit;

[FIG. 20]

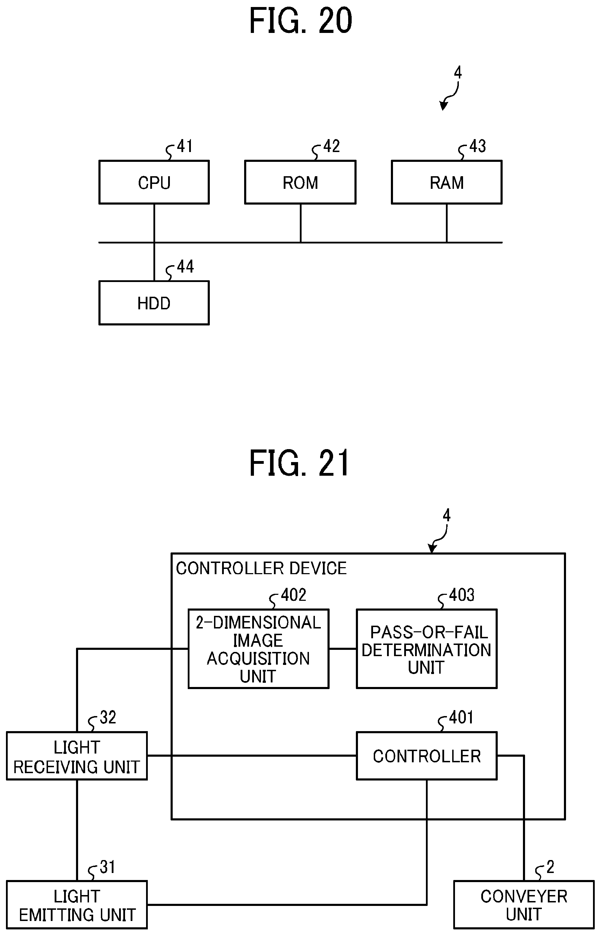

FIG. 20 is a block diagram of a hardware configuration of the control device;

[FIG. 21]
FIG. 21 is a functional block diagram of the functions of the control device;

[FIG. 22]

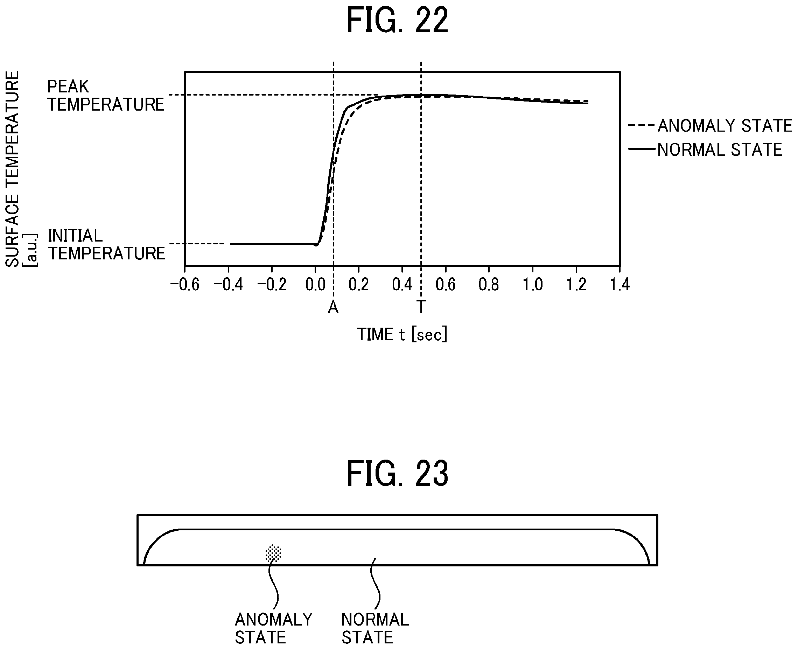

FIG. 22 is a graph of change in surface temperature between a position in a normal state and a position in an anomaly state;

[FIG. 23]
FIG. 23 is a two-dimensional image related to determination of pass-or-fail for the sealing portion.

[FIG. 24]

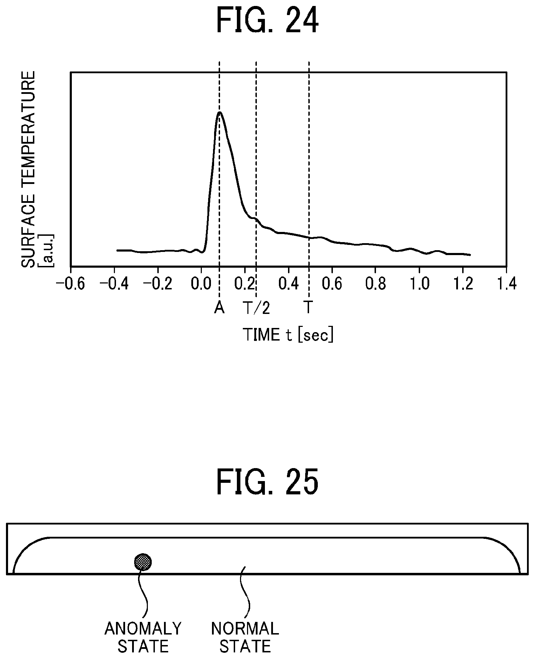

FIG. 24 is a graph of a differential value of the surface temperature over time; and

[FIG. 25]
FIG. 25 is an illustration of a two-dimensional image processed by using multiple images related to determination of the pass or fail for the sealing portion according to the second embodiment.

[Description of Embodiments]

The terminology used herein is for the purpose of describing particular embodiments only and is not intended to be limiting of the present invention. As used herein, the singular forms "a," "an," and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Hereinafter, embodiments of the inspection apparatus and the inspection method will be described in detail with reference to the accompanying drawings.

First Embodiment

FIG. 1 is a diagram of a configuration of an inspection apparatus 1 according to an embodiment. FIG. 2 is a diagram of a package 50 to be inspected by the inspection apparatus 1. The inspection apparatus 1 checks whether the package 50 is properly sealed or not, and rejects the package 50 found to be an anomaly from the production line.

The package 50 will be described.

As illustrated in FIG. 2, the package 50, which is a bag-shaped package material 51, contains, e.g., food such as curry or soup (the contents of the package 50). In the package 50 illustrated in FIG. 2, the bag-shaped opening is sealed by bonding the package materials 51 to each other.

For the package material 51 of the package 50, a single-layer plastic film, a single-layer plastic film having a surface treatment, or a plastic film laminated with multiple single-layer films is used. Examples of the surface treatment include coating for adding moisture-proof or vapor deposition of aluminum, silica, or alumina for adding gas barrier properties.

Further, as the package material 51 of the package 50, a film laminated with an aluminum foil 51b (FIG. 3) on the plastic film described above is used. The package material 51 laminated with the aluminum foil 51b is used in applications involving higher gas barrier properties and moisture proof properties. In particular, the package material 51 laminated with an aluminum foil 51b is a packaging container for pre-packaged food, retort food, a sealed pouch, or a retort pouch.

FIG. 3 is a diagram of a configuration of the package material 51. The package material 51 illustrated in FIG. 3 is a structural example of a package material 51 for the retort pouch. In the package material 51 in FIG. 3, a polyester film 51a, an aluminum foil 51b, and a non-oriented polypropylene (CPP) film 51c are laminated in this order from the surface of the package material 51. A film laminated with an aluminum foil or an aluminum deposition film as in the package material 51 in FIG. 3 has poor visual transparency, and a content packed inside the package material 51 is visually hard to be seen.

The package 50 illustrated in FIG. 2 has a bag-shaped opening in which the package materials 51 are facing each other. The bag-shaped opening is sealed by bonding the package materials 51 to each other, which is referred to a sealing portion 52. The sealing portion 52 is bonded by heat sealing in which a heated bar is pressed against a portion to be sealed, that is, thermocompression bonding or an ultrasonic sealing in which a portion to be sealed is melted and bonded by ultrasonic vibration and pressurization.

Herein, a manufacturing process of the package 50 will be briefly described. The package 50 is manufactured by filling contents (e.g., food such as curry or soup) into a package material 51, which is bag-shaped, by a filling means (e.g., filling machine) and sealing the sealing portion 52 of the package material 51.

In such a manufacturing process, the inspection apparatus 1 inspects the package 50 sealed at the sealing portion 52 in order to make sure that the package 50 is tightly sealed and the content does not leak (i.e., seal inspection). In the seal inspection, the inspection apparatus 1 determines whether the sealing portion 52 has a normal state or an anomaly state (i.e., defect). The anomaly state is, for example, trapping, pinhole, through-hole, wrinkle, and tunnel. Specifically, the trapping is a defect in which the contents are trapped in the sealing portion 52, the pinhole or the through-hole is a defect in which a hole is formed in the sealing portion 52, the wrinkle is a defect in which a crease appears when the sealing portion 52 is folded or crushed, and the tunnel is a defect in which a passage through which the contents may leak to the outside is formed in the sealing portion 52.

The inspection apparatus 1 will be described in detail.

As illustrated in FIG. 1, the inspection apparatus 1 includes a conveyor unit 2, an image acquisition apparatus 3, and a controller device 4.

The image acquisition apparatus 3 includes a light emitting unit 31 (light emitter) disposed below the conveyor unit 2 and a light receiving unit 32 (light receiver) disposed above the conveyor unit 2.

The conveyor unit 2 includes a first conveyor part 21 and a second conveyor part 22. The first conveyor part 21 and the second conveyor part 22 convey the package 50 on an endless belt by rotationally driving the endless belt. The first conveyor part 21 is disposed on the upstream side in the conveying direction X of the package 50 with respect to the arrangement position of the image acquisition apparatus 3. The second conveyor part 22 is disposed on the downstream side in the conveying direction X of the package 50 with respect to the arrangement position of the image acquisition apparatus 3. The conveyor unit 2 has a gap O between the first conveyor part 21 and the second conveyor part 22. The gap O is also a space between the light emitting unit 31 and the light receiving unit 32. The distance, which is the gap O, between the first conveyor part 21 and the second conveyor part 22 is a distance that does not affect the conveyance of the package 50 from the first conveyor part 21 to the second conveyor part 22. Since the conveyor unit 2 has the configuration described above, the conveyor unit 2 conveys the package 50 through the space between the light emitting unit 31 and the light receiving unit 32.

The image acquisition apparatus 3 acquires two-dimensional thermal information on the sealing portion 52 of the package 50 conveyed by the conveyor unit 2 as an image.

The light emitting unit 31 two-dimensionally emits light to the entire sealing portion 52 of the package 50 conveyed by the conveyor unit 2. The light emitting unit 31 may emit light to the package 50 being conveyed by the conveyor unit 2 at the gap O between the first conveyor part 21 and the second conveyor part 22 or may emit light to the package 50 temporarily being stopped on the conveyor unit 2.

The light receiving unit 32 two-dimensionally receives thermal radiation from the entire sealing portion 52 of the package 50. The thermal radiation is caused by the light emitting unit 31's emitting light to the sealing portion 52.

The light emitting unit 31 and the light receiving unit 32 will be described in detail.

As described above, the aluminum vapor deposition film or a film laminated with an aluminum foil is used in the package material 51 of the package 50, and at least aluminum is included in the package material 51 of the package 50. Thus, the light emitting unit 31 of the inspection apparatus 1 according to the present embodiment emits light to one side of the sealing portion 52 of the package 50, in which the light has a wavelength that at least aluminum absorbs. The aluminum foil 51b (FIG. 3) of the package material 51 absorbs the light emitted from the light emitting unit 31 and converts optical energy of the light into thermal energy. Heat generated in the aluminum foil 51b of the package material 51 is conducted between the surfaces of each layer and through each layer and reaches the surface of the package material 51. The package material 51 radiates light due to thermal radiation from the surface. The light radiation is emitted as a spectrum based on the Planck's law and is received by the light receiving unit 32. The light receiving unit 32 two-dimensionally receives information on the thermal radiation.

When the light emitting unit 31 emits light to one side of the sealing portion 52 having a certain initial temperature, the aluminum foil 51b (FIG. 3) of the sealing portion 52 absorbs the light and converts optical energy of the light into thermal energy (i.e., heat is generated). The heat generated in the aluminum foil 51b of the package material 51 is transferred to the other side of the sealing portion 52 through the layer surfaces, forming a temperature distribution on its surface of the sealing portion 52. After the light is emitted to one side of the sealing portion 52 at time 0, the temperature of the other side of the sealing portion 52 starts to rise rapidly, and the temperature reaches a peak at a certain time T. The temperature of the sealing portion 52 gradually decreases due to convection with the surrounding atmosphere or thermal radiation.

FIG. 4 is a graph of the absorbance of aluminum; Aluminum has an absorbance spectrum illustrated in FIG. 4. As illustrated in FIG. 4, aluminum effectively absorbs light at the peak of the absorbance of near infrared light of 0.78 $\mu$m to 1.0 $\mu$m in wavelength. In addition, aluminum has a high absorbance for ultraviolet light (0.38 $\mu$m or shorter in wavelength) and visible light (0.38 $\mu$m to 0.78 $\mu$m in wavelength). The absorbance of aluminum decreases at a wavelength of 1 $\mu$m or longer. Preferably, the light emitting unit 31 emits at least one of ultraviolet light, visible light, or near infrared light. A halogen lamp capable of emitting light including at least ultraviolet light, visible light, or near infrared light can be applied to the light emitting unit 31 of the present embodiment. In general, a halogen lamp can emit light having a wavelength longer than a wavelength of visible light and has a very broad emission spectrum. Depending on the temperature of the halogen lamp, the halogen lamp includes a large amount of light (e.g., 50% or larger) having a wavelength longer than a wavelength of the near infrared light.

The light emitting unit 31 is not limited to a halogen lamp, and a xenon lamp capable of emitting ultraviolet light, visible light, or near infrared light may be applied. In general, the xenon lamp has a broad emission spectrum over ultraviolet light, visible light, and near infrared light, and has multiple sharp emission spectra in the near infrared light. The xenon lamp includes little light having a wavelength longer than near infrared (e.g., 5% or smaller). Such light having a wavelength longer than the wavelength of the near infrared light is also referred to as a heat ray and heats surrounding members, which affects downsizing of the apparatus and selection of components. Preferably, the light emitting unit 31 excludes light having a wavelength longer than near infrared wavelengths.

A near infrared light emitting diode (LED) or a near infrared laser having a peak wavelength in a near infrared wavelengths may be applied to the light emitting unit 31. Since the peak wavelength of the emission spectrum of the near infrared light emitting diode or the near infrared laser is substantially the same as the peak wavelength of the absorption spectrum of aluminum, light energy can be converted into thermal energy with high efficiency. The near infrared LED or the near infrared laser generally has a longer life than a life of a halogen lamp or a xenon lamp and has an advantage in a longer replacement cycle when used in the inspection apparatus 1 that continuously operates.

The light emitting unit 31 may be continuously turned on (i.e., direct current (DC) light emission) or intermittently turned on (i.e., pulse light emission). However, in terms of life, preferably, the light emitting unit 31 can be intermittently turned on at about 1 Hz to 2 Hz. Specifically, the light emitting unit 31 is a laser, an LED, or a xenon lamp.

When continuously turned on (i.e., DC light emission), the light emitting unit 31 may be provided with an intermittent emission means (e.g., shutter) between the light emitting unit 31 and the package 50 so as to intermittently emit light to the package 50.

In the present embodiment, an increase in the surface temperature of the sealing portion 52 may be about several degrees of Celsius to 10°C. Depending on the cost of light source and size, a high-power light source may be used to further raise temperature. When the ambient temperature around the inspection apparatus 1 is about 20°C to 30°C, the surface temperature of the seal portion is about 295K to 315K in absolute temperature. (0°C is 273K. When the ambient temperature is about 20°C to 30°C, it is about 293K to 303K. In consideration of the surface temperature of the sealing portion, it is about 295K to 315K) According to the Planck's law, the thermal radiation corresponding to 300K has wavelengths of about 3 $\mu$m or longer. Thus, the light emitted from the sealing portion 52 of the package 50 caused by thermal radiation has a wavelength of about 3 $\mu$m or longer according to the Planck's law. Thus, the light receiving unit 32 receives the light having a wavelength of 3 $\mu$m or longer.

As described above, since the wavelength of the light emitted from the light emitting unit 31 and the wavelength of the thermal radiation received by the light receiving unit 32 are different from each other (i.e., wavelength difference), the light receiving unit 32 does not receive the light emitted from the light emitting unit 31. Thus, the wavelength difference does not generate noise to the light receiving unit 32, and the light receiving unit 32 receives a signal having a higher quality.

In the transmission spectrum of the atmosphere, there are wavelength bands referred to as an atmospheric window in which the transmittance of the atmosphere is higher. When the inspection is performed in the atmosphere, it is preferable to use such wavelength bands. The wavelength bands are, for example, middle wavelength infrared radiation (MWIR) having a wavelength band of 3 to 6 $\mu$m and long wavelength infrared radiation (LWIR) having a wavelength band of 8 to 14 $\mu$m.

In addition, since the thermal radiation spectrum of about 300K has a peak at about 10 μm in wavelength, it is preferable to use the atmospheric window of LWIR in order to achieve a higher sensitive measurement.

Thus, in the present embodiment, an infrared light receiving element that receives the LWIR is used as the light receiving unit 32. The infrared light receiving element includes a cooling infrared light receiving element cooled to extremely low temperature to achieve higher sensitivity and an uncooled infrared light receiving element operable at room temperature. In the present embodiment, the uncooled infrared light receiving element is used as the light receiving unit 32 because it is practically low cost.

The light emitting unit 31 may be a point light source, a line light source, or an area light source as long as these light sources two-dimensionally emits light to the entire sealing portion 52. In the area light source, the point light sources may be arranged in vertical and horizontal directions.

FIG. 5 is a diagram of a point light source in the case of emitting light to the package 50 being conveyed. FIG. 6 is a diagram of a point light source in the case of emitting the light to the package 50 being stopped. As illustrated in FIGS. 5 and 6, the point light source emits the light as a point shape to the sealing portion 52. As illustrated in FIG. 5, when emitting the light to the package 50 being conveyed, the light emitting unit 31 two-dimensionally emits the light by the point light source through an optical system that one-dimensionally scans the sealing portion 52. As illustrated in FIG. 6, when emitting the light to the package 50 being stopped, the light emitting unit 31 two-dimensionally emits the light by the point light source through an optical system that two-dimensionally scans the sealing portion 52.

FIG. 7 is a diagram of a line light source in the case of emitting the light to the conveyed package 50. FIG. 8 is a diagram of a line light source in the case of emitting the light to the package 50 being stopped. As illustrated in FIGS. 7 and 8, the line light source emits the light to the sealing portion 52 in a line shape. The line light source may be composed of the point light sources arranged in one row or multiple rows or may form a line-shaped emission pattern through an optical system using the point light sources. As illustrated in FIG. 7, when emitting the light to the package 50 being conveyed, the light emitting unit 31 two-dimensionally emits the light to the package 50 by a line light source longer than the width of the sealing portion 52 (i.e., longitudinal width of the seal portion 52). As illustrated in FIG. 8, when emitting the light to the package 50 being stopped, the light emitting unit 31 two-dimensionally emits the light to the package 50 by a line light source slightly longer than the lateral width of the sealing portion 52 through an optical system that one-dimensionally scans the sealing portion 52.

FIG. 9 is a diagram of an area light source in the case of emitting the light to the package 50 being conveyed. FIG. 10 is a diagram of the area light source in the case of emitting the light to the package 50 being stopped. As illustrated in FIGS. 9 and 10, the area light source emits the light to the sealing portion 52 in an area shape as one shot. The area light source may be composed of the point light sources arranged vertically and horizontally, the line light sources arranged in a row, or these light sources are combined with an optical system to form an area shaped emitting pattern. Thus, in the area light source the point light sources are arrayed in vertical and horizontal directions. As illustrated in FIG. 9, when emitting the light to the package 50 being conveyed, the light emitting unit 31 using the area light source emits the light to the package 50 by one shot. As illustrated in FIG. 10, when emitting the light to the package 50 being stopped, the light emitting unit 31 using the area light source emits the light to the package 50 by one shot.

On the other hand, the light receiving unit 32 may be any one of the point light receiving element, the line light receiving element, and the area light receiving element as long as these light receiving elements two-dimensionally receive thermal radiation from the entire sealing portion 52 upon the light emission to the sealing portion 52. A thermopile may be applied to the point light receiving element. A microbolometer may be applied to the area light receiving element.

FIG. 11 is a diagram of the point light receiving element in the case of receiving thermal radiation from the package 50 being conveyed. FIG. 12 is a diagram of the point light receiving element in the case of receiving thermal radiation from the package 50 being stopped. As illustrated in FIG. 11, when the light receiving unit 32 receives thermal radiation from the package 50 being conveyed, the light receiving unit 32 two-dimensionally receives the thermal radiation with a point light receiving element through an optical system that one-dimensionally scans the sealing portion 52. As illustrated in FIG. 12, when the light receiving unit 32 receives thermal radiation from the package 50 being stopped, the light receiving unit 32 using the point light receiving element two-dimensionally receives the thermal radiation through the optical system that two-dimensionally scans the sealing portion 52.

FIG. 13 is a diagram of the line light receiving element in the case of receiving thermal radiation from the package 50 being conveyed. FIG. 14 is a diagram of the line light receiving element in the case of receiving thermal radiation from the package 50 being stopped. As illustrated in FIG. 13, when the light receiving unit 32 receives thermal radiation from the package 50 being conveyed, the light receiving unit 32 two-dimensionally receives the thermal radiation using a line light receiving element longer than the width of the sealing portion 52. As illustrated in FIG. 14, when the light receiving unit 32 receives thermal radiation from the package 50 being stopped, the light receiving unit 32 two-dimensionally receives the thermal radiation with the line light receiving element slightly longer than the lateral width of the sealing portion 52 through an optical system that one dimensionally scans the sealing portion 52.

FIG. 15 is a diagram of the area light receiving element in the case of receiving thermal radiation from the package 50 being conveyed. FIG. 16 is a diagram of an example of an area light receiving element in the case of receiving thermal radiation from the package 50 being stopped. As illustrated in FIG. 15, when the light receiving unit 32 receives the thermal radiation from the package 50 being conveyed, the light receiving unit 32 receives the thermal radiation from the sealing portion 52 with the area light receiving element as one shot. As illustrated in FIG. 16, when the light receiving unit 32 receives the thermal radiation from the package 50 being stopped, the light receiving unit 32 receives the thermal radiation form the sealing portion 52 with the area light receiving element as one shot.

As described above, there are various modifications for the light emitting unit 31 that emits light to the entire sealing portion 52 and the light receiving unit 32 that receives thermal radiation from the entire sealing portion 52. In the present embodiment, the light emitting unit 31 is an area light source, and the light receiving unit 32 is an area light receiving element. As described above, by combining the area light source and the area light receiving element, the light can be emitted to the entire sealing portion 52 as one shot and the thermal radiation from the entire sealing portion 52 can be received as one shot, even when the package 50 is being conveyed or stopped. Further, in the case of using an area light source in which the point light sources (e.g., LEDs) are arranged vertically and horizontally and an area light receiving element, an optical system for one- or two-dimensional scanning (i.e., a movable component) may be excluded, and a higher-quality image can be acquired without being affected by vibration of the movable component.

The positional relation between the light emitting unit 31 and the light receiving unit 32 (i.e., arrangement or layout) will be described in detail.

As described above, the light receiving unit 32 does not directly receive the light emitted from the light emitting unit 31 and the light transmitted through the sealing portion 52 of the package material 51 or the light reflected from the sealing portion 52. The light receiving unit 32 receives light emitted from the surface of the package material 51 as the thermal radiation generated by the light emitted from the light emitting unit 31. The light emitting unit 31 and the light receiving unit 32 are not limited to an arrangement based on transmission of the light or regular reflection of the light. Thus, the latitude in the layout of the light emitting unit 31 and the light receiving unit 32 is increased.

FIG. 17 is a diagram of a first layout of the light emitting unit 31 and the light receiving unit 32 as an example. In the example illustrated in FIG. 17, the light receiving unit 32 is installed with an optical axis tilted with respect to the light emitting unit 31 and the sealing portion 52 of the package material 51 having the surfaces substantially parallel to the conveying direction X. By tilting the optical axis of the light receiving unit 32 with respect to the sealing portion 52 of the package material 51, the reflection (the reflection image) of the light receiving unit 32 itself can be prevented.

Specifically, as illustrated in FIG. 17, the package 50 has a bloated portion to pack the contents inside the package material 51. The package 50 has a slope portion 53 and a slope portion 54. The sealing portion 52 is substantially parallel to the conveying direction X, but the slope portion 53 is tilted upwards and the slope portion 54 is tilted downwards with respect to the conveying direction X. In FIG. 17, the light receiving unit 32 is installed with the optical axis tilted in the same direction as the slope portion 53.

FIG. 18 is a diagram of a second layout of the light emitting unit 31 and the light receiving unit 32 as an example. In the example illustrated in FIG. 18, under a condition that there is no influence of reflection of the light receiving unit 32 itself, the light receiving unit 32 may be disposed at a position orthogonal to the sealing portion 52 which is a surface substantially parallel to the conveying direction X without being tilted in the same direction as slope portion 53.

FIG. 19 is a diagram of a third layout of the light emitting unit 31 and the light receiving unit 32 as an example. In the example illustrated in FIG. 19, in addition to the second layout of FIG. 18, the light emitting unit 31 is installed with its optical axis tilted with respect to the sealing portion 52 of the package material 51 and the light receiving unit 32 which are surfaces substantially parallel to the conveying direction X.

The controller device 4 will be described. The controller device 4 entirely controls the inspection apparatus 1. FIG. 20 is a block diagram of a hardware of the controller device 4. As illustrated in FIG. 20, the controller device 4 includes a central processing unit (CPU) 41 , a read only memory (ROM) 42 , a random access memory (RAM) 43 , and a hard disk drive 44 (HDD). The controller device 4 controls each unit of the conveyor unit 2 and the image acquisition apparatus 3 to drive using the RAM 43 as a working memory in accordance with a program stored in the RAM 43 or the HDD 44 in advance. As the controller device 4, for example, a personal computer (e.g., desktop, notebook computer or laptop computer) can be used.

The program executed by the controller device 4 according to the present embodiment may be provided by recorded in a computer-readable recording medium such as a compact disc read-only memory (CD-ROM), a flexible disk (FD), a compact disc recordable (CD-R), and a digital versatile disc (DVD) as a file of an installable format or an executable format.

Further, the program executed by the controller device 4 according to the present embodiment may be stored in a computer connected to a network such as the Internet and provided by downloaded through the network. The program executed by the controller device 4 according to the present embodiment may be provided or distributed through a network such as the Internet.

The controller device 4 determines whether the sealing portion 52 of the package 50 is in a normal state or an anomaly state (i.e., defect) based on the two-dimensional image acquired by the image acquisition apparatus 3.

The function of the controller device 4 will be described.

FIG. 21 is a functional block diagram of the controller device 4. As illustrated in FIG. 21, when the CPU 41 works in accordance with the program, the controller device 4 works as a controller 401, a two-dimensional image acquisition unit 402, and a pass-or-fail determination unit 403.

The controller 401 controls light emission of the light emitting unit 31 and light reception of the light receiving unit 32 of the image acquisition apparatus 3. The controller 401 controls the first conveyor part 21 and the second conveyor part 22 of the conveyor unit 2 to drive.

The two-dimensional image acquisition unit 402 acquires two-dimensional thermal information on the sealing portion 52 of the package 50 from thermal radiation information two-dimensionally received by the light receiving unit 32 as an image. The two-dimensional image acquisition unit 402 converts the light information into the thermal information and acquires a thermal image. The two-dimensional image acquisition unit 402 is also referred to as thermography (thermal image). The two-dimensional image acquisition unit 402 may be provided in an infrared camera in which the light receiving unit 32 is an uncooled microbolometer.

The pass-or-fail determination unit 403 determines whether the sealing portion 52 of the package 50 is in a normal state or in an anomaly state (i.e., determination of pass or fail) based on the two-dimensional image having the thermal information. The pass-or-fail determination unit 403 applies various conventional image processing on the two-dimensional image in order to reveal an anomaly state.

As described above, when the sealing portion 52 of the package 50 has the anomaly state, the heat capacity of the anomaly state of the sealing portion 52 changes with respect to normal state. For example, when a content or a portion of the content of the package 50 is trapped in the sealing portion 52 (i.e., trapping), the trapping is a defect in which the content is trapped between the packaging materials (i.e., one package material 51 and the opposite packaging material 51). Thus, a new layer is generated by the content trapped in the sealing portion 52, and heat transfer slows. A tunnel is a defect in which a passage through which the content leaks to the outside of the package is formed in the sealing portion 52. Since there is an air layer between one packaging material 51 and the opposite package material 51, heat transmission slows due to high thermal resistance of air. When the sealing portion 52 of the package 50 is in an anomaly state as described above, it takes time for heat to reach the surface of the sealing portion 52 and the time delays, so that a temperature distribution occurs on the surface. Thus, the pass or fail determination unit 403 can determine that the two-dimensional image is in an anomaly state, that is, not acceptable, based on the temperature distribution generated in the two-dimensional image having the thermal information.

The pass-or-fail determination of the sealing portion 52 in the pass or fail determination unit 403 will be described.

FIG. 22 is a graph of a change over time t of the surface temperature between a position in a normal state and a position in an anomaly state illustrated in FIG. 23. FIG. 23 is a two-dimensional image related to the pass-or-fail determination of the sealing portion 52 as an specific example. In FIG. 23, as an example of the anomaly state, an air layer is in the sealing portion 52. The anomaly state described above also occurs in the tunnel, or the trapping of the content including air.

In the example illustrated in FIG. 22, light is emitted from the light emitting unit 31 to one side of the sealing portion 52 including aluminum and having the normal state and the anomaly state at time 0, and the temperature distribution of the surface at the other side of the sealing portion 52 is acquired at certain time. The time 0 is the time when the light emitting unit 31 emits light to the sealing portion 52.

The two-dimensional image in FIG. 23 is an image acquired at time A in FIG. 22. The image in FIG. 23 is a monochrome image in which a white portion indicates higher temperature and a grey portion indicates a lower temperature. As illustrated in FIG. 23, the position in which the anomaly state (i.e., defect) occurs due to the air layer in the sealing portion 52 is darker than the surroundings.

In the example of FIG. 22, the temperature of the normal state reaches the peak temperature at time T. The time T is about 480 milliseconds (ms). The time T is the time when the surface temperature of the normal state or the anomaly state reaches the peak temperature. Although the time T varies depending on the type and thickness of the package material 51, it is about several hundred milliseconds (ms) to 1 second (s or sec) or less. As illustrated in FIG. 22, the time when the temperature of the anomaly state reaches the peak temperature is about 580 ms. The temperature of the anomaly state reaches the peak temperature after passing the time T, and the peak temperatures of the normal state and the anomaly state are almost the same.

FIG. 24 is a graph of a differential value of the surface temperature over time t. In the graph, the time 0 is the time when the light emitting unit 31 emits light, the time T is the time when the surface temperature of the normal state or the anomaly state reaches the peak temperature, and the time T/2 is a half of the time T.

The graph in FIG. 24 is the results obtained by subtracting the surface temperatures at the positions of the anomaly state from the surface temperatures at the positions of the normal state. When a certain time t is larger than 0 and smaller than T (i.e., $0 < t < T$) in FIG. 24, the value obtained by subtracting the surface temperature at the position of the anomaly state from the surface temperature at the position of the normal state is a positive value. As depicted by a dotted line in FIG. 24, the temperature in the normal state is higher than that in the anomaly state at a certain time A. The time A illustrated in FIG. 24 is about 80 ms, and FIG. 23 is a two-dimensional image acquired at the time A.

It can be found from FIG. 24 that the temperatures of the normal state and the anomaly state of the sealing portion 52 differently change over time t, and a larger temperature difference, which is detectable, between the normal state and the anomaly state occurs at a certain time. The normal state and the anomaly state have almost the same peak temperature over time, and the temperature difference becomes smaller after passing the peak temperature.

As described above, in a two-dimensional image acquired at a certain time t ($0 < t < T$), if there is the tunnel or the trapping as an anomaly state, the temperature at the tunnel or the trapping becomes lower than that of its surroundings (i.e., temperature distribution). Thus, such a temperature distribution is obtained. The pass-or-fail determination unit 403 determines the anomaly state by detecting the absolute value of the temperature difference between the normal state and the anomaly state.

As illustrated in FIG. 24, when t is larger than 0 and smaller than T/2 (i.e., $0 < t < T/2$), the temperature difference between the normal state and the anomaly state becomes particularly larger. In the case of using the two-dimensional image acquired at the time t ($0 < t < T/2$), there is an advantage that the inspection time in the inspection apparatus 1 becomes shorter as t becomes smaller. When the two-dimensional image acquired at the time t ($0 < t < T/2$) is used for the inspection, the light emitting unit 31 emits light to the sealing portion 52 (i.e., emitting light) and the light receiving unit 32 receives light from the sealing portion 52 (i.e., receiving light) at faster speed. If one-dimensional or two-dimensional scanning is used for the light emission and the light reception, the inspection time may increase (i.e., time constraints become tighter). For this reason, the light emission and the light reception are preferably performed as one shot with respect to the entire sealing portion 52.

Depending on the anomaly state, the thermal resistance may become smaller, and the temperature of the anomaly state may become higher than the surrounding temperature. In such a case, the anomaly state of the sealing portion 52 can be detected by inspecting the difference between the normal state and the anomaly state.

For example, a case where the temperature of the anomaly state is lower than that of the surroundings, which is due to an air layer of the anomaly state, will be described below.

The pass-or-fail determination unit 403 determines pass or fail of the sealing portion 52 from multiple two-dimensional images. Specifically, the pass-or-fail determination unit 403 determines the pass or fail of the sealing portion 52 from multiple two-dimensional images acquired at a certain time interval by the light receiving unit 32. The accuracy of pass-or-fail determination is improved by using multiple two-dimensional images acquired at a certain time interval.

When the light receiving unit 32 receives light including the multiple two-dimensional images, the light receiving unit 32 has the field of view that can acquire each two-dimensional image. When the package 50 is being stopped on the conveyor unit 2, the light receiving unit 32 does not have a difficulty in acquiring the two-dimensional images. However, when the package 50 is being conveyed on the conveyor unit 2, the field of view of the light receiving unit 32 is widened to acquire the two-dimensional image along with the movement of the conveyor unit 2, the conveyance speed of the conveyor unit 2 is adjusted, or the light receiving unit 32 receives light by following the movement of the package 50 being conveyed.

As a simple example, a case where the pass-or-fail determination unit 403 determines pass or fail of the sealing portion 52 using two two-dimensional images will be described below. The two-dimensional image acquisition unit 402 acquires at least one two-dimensional image at a certain time S larger than 0 and smaller than T (i.e., $0 < S < T$) and acquires at least one two-dimensional image at a certain time U larger than T (i.e., $U > T$). Herein, t includes S and U.

The pass-or-fail determination unit 403 acquires one two-dimensional image at a certain time S larger than 0 and smaller than T (i.e., $0 < S < T$) and the other two-dimensional image at a certain time U larger than T (i.e., $U > T$) and performs image processing to obtain the difference using the two two-dimensional images. Herein, t includes S and U. When U is larger than T (i.e., $U > T$), the temperature exceeds the peak temperature, and thereafter the temperature decreases due to convection of the atmosphere. However, the temperature decreasing time is much longer than the temperature increasing time from 0 to T. The temperature at the time U can be regarded as substantially equal to the peak temperature. The pass-or-fail determination unit 403 obtains the temperature difference, which is a relative value, between the temperature at U (i.e., substantially peak temperature) and the temperature at S of the sealing portion 52 that may include the normal state and the anomaly state. When a temperature difference is larger than the temperature difference of the normal state, the pass-or-fail determination unit 403 detects the anomaly state. Preferably, the time U is close to the time T. For example, when an infrared camera having 30 frame per second (fps) is used as the light receiving unit 32, the two frames at the time S and the time U may be discontinuous frames.

As described above, the pass-or-fail determination unit 403 performs, for example, image processing using multiple images, differential processing, or regression analysis processing in consideration of non-uniformity of the initial temperature.

In order to reduce the inspection time in the inspection apparatus 1, it is preferable that acquisition time of the two-dimensional image is shorter. Preferably, the time S and the time U are continuous in two frames rather than discontinuous in two frames. Preferably, the two-dimensional image acquisition unit 402 acquires multiple two-dimensional images at a certain interval, and the multiple two-dimensional images are consecutive multiple two-dimensional images.

The pass-or-fail determination unit 403 performs an image processing using two two-dimensional images continuously acquired at certain times S and U that are larger than 0 and smaller than T (i.e., 0 < S < T and 0< U < T). Herein, t includes S and U. Since the temperature rise is faster in a normal state and slower in an anomaly state, the temperature rise rates for the normal sate and the anomaly state with respect to time are different. Thus, the pass-or-fail determination unit 403 obtains the temperature rising difference (i.e., temperature rising rate),which is relative value, between the temperature at the time S and the temperature at the time U.

As described above, since the light emitting unit 31 emits light at the time 0 and the pass-or-fail determination unit 403 continuously acquires two two-dimensional images at the times S and U, the inspection time is reduced.

Similarly, a case where the pass-or-fail determination unit 403 determines pass or fail of the sealing portion 52 using three two-dimensional images will be described.

The pass-or-fail determination unit 403 performs a regression analysis process using three two-dimensional images that are continuously acquired at certain times S1, S2, and S3 that are larger than 0 and smaller than T (i.e., 0 < S1 < T, 0 < S2 < T, and 0 < S3 < T). Herein, t includes S1, S2, and S3. Since the pass-or-fail determination unit 403 performs regression analyses at the times S1, S2, and S3, the temperature change, which is represented by relative values, is analyzed with higher accuracy. As a simple example, a clear difference between the normal state and the anomaly state is obtained from a slope of a linear regression (i.e., a temperature rise rate per unit time).

As described above, the inspection apparatus 1 determines whether the sealing portion 52 of the package 50 is normal or anomaly. Further, in the inspection apparatus 1, after the package 50 is conveyed by the second conveyor part 22 of the conveyor unit 2, the package 50 determined to be anomaly is removed from the second conveyor part 22 by a sorting means (e.g., rejecter). By contrast, the package 50 determined to be normal is conveyed by the second conveyor part 22 and packed into a box by a packing means (e.g., caser) or manually.

As described above, according to the present embodiment, in order to increase the temperature of the package, a light source that emits light suitable for the package is used. Specifically, the light from the light source is absorbed by the package, and the energy of the light is converted into thermal energy. If a heating means, which is, for example, a heater, is used for heating the sealing portion 52, heat generated from the heater spreads to peripheral members and causes an adversary effect on the peripheral members. However, in the present embodiment, since light is used for heating the sealing portion 52, an adversary effect on the peripheral members is smaller. Thus, the light emitting unit 31, the light receiving unit 32, and the conveyor unit 2 are arranged closer to each other. As a result, the inspection apparatus 1 has a higher latitude in its layout. In addition, controlling light (light energy) is easier than heart (heat energy) in terms of spatial conduction of energy. Thus, a thermal image with a higher quality is acquired.

Second Embodiment

The second embodiment is outside the scope of the appended claims.

At least one two-dimensional image may be acquired at a certain time t (t < 0) and noise removing processing is executed, which is different from the first embodiment.

The initial temperature of the sealing portion 52 may vary in different locations within the sealing portion 52, which is due to ambient temperature or non-uniformity in the characteristics of the sealing portion 52. When the line light receiving element or the area light receiving element is used as the light receiving unit 32, the initial temperature of the sealing portion 52 varies with the position in the light receiving unit 32 due to sensitivity variations within the pixels of the light receiving unit 32 (i.e., noise depending on positions).

The pass-or-fail determination unit 403 may acquire at least one two-dimensional image before the light emitting unit 31 emits light to remove the noise depending on positions and perform differential image processing using a two-dimensional image to be acquired after the light emitting unit 31 emits light at a certain time t that is larger than 0 and smaller than T (i.e., 0 < t < T). In this case, the two-dimensional image acquisition unit 402 acquires at least one two-dimensional image at a certain time t (t < 0). Herein, the two-dimensional image acquisition unit 402 may discontinuously acquire the two-dimensional images. The pass-or-fail determination unit 403 acquires at least one two-dimensional image at a certain time R (R < 0) and may execute a noise removing process.

In order to remove the noise, the pass-or-fail determination unit 403 may acquire multiple two-dimensional images at certain times Rn (n ≥ 2 and Rn < 0), and execute an averaging process to the acquired two-dimensional images.

FIG. 25 is a two-dimensional image processed by using multiple two-dimensional images related to determination of the pass or fail of the sealing portion 52 according to the second embodiment. The two-dimensional images illustrated in FIG. 25 is preferably visualized by the image processing (i.e., the regression analysis) using one two-dimensional image acquired at the time R (R < 0) and three two-dimensional images continuously acquired at certain times S1, S2, and S3 (0 < S1 < T, 0 < S2 < T, and 0 < S3 < T). Thus, four two-dimensional images are used.

As compared with the two-dimensional image illustrated in FIG. 23, the two-dimensional image illustrated in FIG. 25 has a higher contrast between a normal state (i.e., a white portion in the drawing) and an anomaly state (i.e., a gray portion in the drawing).

As described the pass-or-fail determination unit 403 achieves the higher accuracy of the defect determination (i.e., determination of the anomaly state) of the sealing portion 52.

Aluminium may be used as a material that absorbs light energy, but the material is not limited thereto, and other metals, or resins may be used as long as the material absorbs light energy and converts light energy into thermal energy.

A retort pouch may be applied as the packaging material 51 of the package 50, but the package material 51 is not limited thereto, and can be applied to various package materials 51 that packs contents and seal openings. Examples of the package material 51 of the package 50 include, for example, a lid of a yogurt container, a container for sealing a medicine tablet therein.

Although the embodiments of the present invention have been described in detail with reference to the drawings, the above embodiments are merely examples of the present invention, and the present invention is not limited to the configurations of the above embodiments, but only by the appended claims.

The above-described embodiments are illustrative and do not limit the present invention. Thus, numerous additional modifications and variations are possible in light of the above teachings.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium also includes a storage medium for storing processor readable code such as a floppy disk, a hard disk, a compact disc read-only memory (CD-ROM), a magnetic tape device, or a solid state memory device.

Each of the functions of the described embodiments may be implemented by one or more processing circuits or circuitry. Processing circuitry includes a programmed processor, as a processor includes circuitry. A processing circuit also includes devices such as an application specific integrated circuit (ASIC), a digital signal processor (DSP), a field programmable gate array (FPGA), and conventional circuit components arranged to perform the recited functions.

This patent application is based on and claims priority to Japanese Patent Application No. 2021-141840, filed on August 31, 2021, in the Japan Patent Office.

[Reference Signs List]

    1 Inspection apparatus
    3 Image acquisition apparatus
    31 Light emitting unit
    32 Light receiving unit
    51 Package
    52 Sealing portion
    402 Two-dimensional image acquisition unit
    403 Pass-or-fail determination unit

[Citation List]

[Patent Literature]

Japanese Unexamined Patent Application Publication No. 2020-041840

**Claims**

1. An inspection apparatus comprising:
   an image acquisition apparatus comprising:

   a light emitting unit (31) configured to emit light to a sealing portion (52) of a package (50) including a light energy absorbing material (51), the light having a wavelength absorbed by the light absorbing material (51);

a light receiving unit (32) configured to receive thermal radiation from the sealing portion (52) as thermal information; and
an image acquisition unit (402) configured to acquire two-dimensional thermal information on the sealing portion (52) as a two-dimensional image through the light receiving unit (32), wherein the package (50) is disposed between the light emitting unit (31) and the light receiving unit (32), **characterised in that**:

the two-dimensional image acquisition unit (402) acquires at least one two-dimensional image at a time t satisfying a condition below:

$$0 < t < T$$

where 0 is a time when the light emitting unit (31) emits the light to one side of the sealing portion (52) and T is a time when surface temperature of the other side of sealing portion (52) reaches peak temperature,; and
a pass-or-fail determination unit (403) configured to determine whether the sealing portion (52) is pass or fail through the two-dimensional image acquired by the image acquisition unit (402),
wherein the pass-or-fail determination unit (403) controls the image acquisition unit (402) to acquire at least one two-dimensional image at a time t satisfying a condition below:

$$0 < t < T/2.$$

2. The inspection apparatus according to claim 1, wherein the light receiving unit (32) is arranged not to directly receive the light emitted from the light emitting unit (31) and passed through the sealing portion (52) and the light emitted from the light emitting unit (31) and reflected the sealing portion (52).

3. The inspection apparatus according to claim 1 or 2, wherein the light emitting unit (31) emits light to the sealing portion (52) as one shot, and the light receiving unit (32) receives thermal radiation form the sealing portion (52) as one shot.

4. The inspection apparatus according to any preceding claim,
wherein the light emitting unit (31) is an area light source in which point light sources are arranged in vertical and horizontal directions.

5. The inspection apparatus according to any preceding claim,
wherein the two-dimensional image includes multiple two-dimensional images.

6. The inspection apparatus according to claim 5, wherein the multiple two-dimensional images are consecutive multiple two-dimensional images acquired by the image acquisition unit (402) at a certain interval.

7. The inspection apparatus according to any preceding claim,

wherein the pass-or-fail determination unit (403) controls the image acquisition unit (402) to acquire at least one two-dimensional image at a time t satisfying a condition below:

$$t < 0$$

and executes a noise removing process on the at least one two-dimensional image acquired at the time t.

8. An image acquiring and inspecting method comprising:

emitting light by a light emitting unit (31) to a sealing portion (52) of a package (50) including a light energy absorbing material (51), the light having a wavelength absorbed by the light energy absorbing material (51);
receiving thermal radiation from the sealing portion (52) by a light receiving unit (32) as thermal information; and
acquiring two-dimensional thermal information on the sealing portion (52) as a two-dimensional image through the light receiving unit (32),
wherein the package is disposed between the light emitting unit (31) and the light receiving unit (32),
**characterised in that**:

the acquiring includes acquiring at least one two-dimensional image at a time t satisfying a condition below:

$$0 < t < T$$

where 0 is a time when the light emitting unit (31) emits light to one side of the sealing portion (52), and T is a time when surface temperature of the other side of sealing portion (52) reaches a peak temperature,
determining by a pass-or-fail determination unit (403) whether the sealing portion (52) is pass or fail through the two-dimensional image acquired by the image acquisition unit (402),

wherein the pass-or-fail determination unit (403) controls the image acquisition unit (402) to acquire at least one two-dimensional image at a time t satisfying a condition below:

$$0 < t < T/2.$$

## Patentansprüche

1. Inspektionseinrichtung, umfassend:

   eine Bildaufnahmeeinrichtung, umfassend:

   eine Leuchteinheit (31), die so konfiguriert ist, dass sie Licht auf einen Dichtungsabschnitt (52) eines Gehäuses (50) aussendet, das ein lichtabsorbierendes Material (51) einschließt, wobei das Licht eine Wellenlänge aufweist, die von dem lichtabsorbierenden Material (51) absorbiert wird; eine Lichtempfangseinheit (32), die so konfiguriert ist, dass sie Wärmestrahlung vom Dichtungsabschnitt (52) als thermische Informationen empfängt; und eine Bildaufnahmeeinheit (402), die so konfiguriert ist, dass sie zweidimensionale thermische Informationen über den Dichtungsabschnitt (52) als zweidimensionales Bild durch die Lichtempfangseinheit (32) aufnimmt, wobei das Gehäuse (50) zwischen der Leuchteinheit (31) und der Lichtempfangseinheit (32) angeordnet ist,

   **dadurch gekennzeichnet, dass**:
   die zweidimensionale Bildaufnahmeeinheit (402) mindestens ein zweidimensionales Bild zu einem Zeitpunkt t aufnimmt, der die folgende Bedingung erfüllt:

   $$0 < t < T$$

   wobei 0 ein Zeitpunkt ist, an dem die Leuchteinheit (31) das Licht auf eine Seite des Dichtungsabschnitts (52) aussendet, und T ein Zeitpunkt ist, an dem die Oberflächentemperatur der anderen Seite des Dichtungsabschnitts (52) Spitzentemperatur erreicht; und eine Gut-oder-Schlecht-Bestimmungseinheit (403) konfiguriert ist, dass sie anhand des von der Bildaufnahmeeinheit (402) aufgenommenen zweidimensionalen Bildes bestimmt, ob der Dichtungsabschnitt (52) gut oder schlecht ist.

wobei die Gut-oder-Schlecht-Bestimmungseinheit (403) die Bildaufnahmeeinheit (402) steuert, um mindestens ein zweidimensionales Bild zu einem Zeitpunkt t aufzunehmen, der die folgende Bedingung erfüllt:

$$0 < t < T/2.$$

2. Inspektionseinrichtung nach Anspruch 1, wobei die Lichtempfangseinheit (32) so angeordnet ist, dass sie nicht direkt das von der Leuchteinheit (31) ausgesendete und durch den Dichtungsabschnitt (52) hindurchtretende Licht und das von der Leuchteinheit (31) ausgesendete und vom Dichtungsabschnitt (52) reflektierte Licht empfängt.

3. Inspektionseinrichtung nach Anspruch 1 oder 2, wobei die Leuchteinheit (31) Licht als einen einzigen Impuls an den Dichtungsabschnitt (52) aussendet und die Leuchteinheit (32) Wärmestrahlung vom Dichtungsabschnitt (52) als einen einzigen Impuls empfängt.

4. Inspektionseinrichtung nach einem vorstehenden Anspruch, wobei es sich bei der Leuchteinheit (31) um eine Flächenlichtquelle handelt, in der Punktlichtquellen in vertikaler und horizontaler Richtung angeordnet sind.

5. Inspektionseinrichtung nach einem vorstehenden Anspruch, wobei das zweidimensionale Bild mehrere zweidimensionale Bilder einschließt.

6. Inspektionseinrichtung nach Anspruch 5, wobei es sich bei den mehreren zweidimensionalen Bildern um aufeinanderfolgende mehrere zweidimensionale Bilder handelt, die von der Bildaufnahmeeinheit (402) in einem bestimmten Intervall aufgenommen wurden.

7. Inspektionseinrichtung nach einem vorstehenden Anspruch,

   wobei die Gut-oder-Schlecht-Bestimmungseinheit (403) die Bildaufnahmeeinheit (402) steuert, um mindestens ein zweidimensionales Bild zu einem Zeitpunkt t aufzunehmen, der die folgende Bedingung erfüllt:

   $$t < 0$$

   und einen Rauschentfernungsprozess an dem mindestens einen zweidimensionalen Bild durchführt, das zum Zeitpunkt t aufgenommen wurde.

**8.** Verfahren zur Bildaufnahme und -inspektion, umfassend:

Aussenden von Licht durch eine Leuchteinheit (31) an einen Dichtungsabschnitt (52) eines Gehäuses (50), das ein lichtabsorbierendes Material (51) einschließt, wobei das Licht eine Wellenlänge aufweist, die von dem lichtabsorbierenden Material (51) absorbiert wird; Empfangen der Wärmestrahlung des Dichtungsabschnitts (52) durch eine Lichtempfangseinheit (32) als thermische Informationen; und Aufnehmen zweidimensionaler thermischer Informationen über den Dichtungsabschnitt (52) als ein zweidimensionales Bild durch die Lichtempfangseinheit (32), wobei das Gehäuse zwischen der Leuchteinheit (31) und der Lichtempfangseinheit (32) angeordnet ist, **dadurch gekennzeichnet, dass**:

das Aufnehmen die Aufnahme von mindestens einem zweidimensionalen Bild zu einem Zeitpunkt t einschließt, der die folgende Bedingung erfüllt:

$$0 < t < T$$

wobei 0 der Zeitpunkt ist, an dem die Leuchteinheit (31) Licht auf eine Seite des Dichtungsabschnitts (52) aussendet, und T der Zeitpunkt ist, an dem die Oberflächentemperatur der anderen Seite des Dichtungsabschnitts (52) eine Spitzentemperatur erreicht, Bestimmen durch eine Gut-oder-Schlecht-Bestimmungseinheit (403) anhand des von der Bildaufnahmeeinheit (402) aufgenommenen zweidimensionalen Bildes, ob der Dichtungsabschnitt (52) gut oder schlecht ist, wobei die Gut-oder-Schlecht-Bestimmungseinheit (403) die Bildaufnahmeeinheit (402) steuert, um mindestens ein zweidimensionales Bild zu einem Zeitpunkt t aufzunehmen, der die folgende Bedingung erfüllt:

$$0 < t < T/2.$$

**Revendications**

**1.** Appareil d'inspection comprenant :

un appareil d'acquisition d'image comprenant :

une unité électroluminescente (31) configurée pour émettre de la lumière vers une partie de scellage (52) d'un emballage (50) incluant un matériau absorbant l'énergie lumineuse (51), la lumière présentant une longueur d'onde absorbée par le matériau absorbant la lumière (51) ; une unité de réception de lumière (32) configurée pour recevoir le rayonnement thermique de la partie de scellage (52) sous la forme d'informations thermiques ; et une unité d'acquisition d'image (402) configurée pour acquérir des informations thermiques bidimensionnelles sur la partie de scellage (52) sous la forme d'une image bidimensionnelle à travers l'unité de réception de lumière (32), dans lequel l'emballage (50) est disposé entre l'unité électroluminescente (31) et l'unité de réception de lumière (32),

**caractérisé en ce que** :
l'unité d'acquisition d'image bidimensionnelle (402) acquiert au moins une image bidimensionnelle à un moment t remplissant une condition ci-dessous :

$$0 < t < T$$

dans laquelle 0 représente le moment auquel l'unité électroluminescente (31) émet la lumière sur un côté de la partie de scellage (52) et T représente le moment auquel la température de surface de l'autre côté de la partie de scellage (52) atteint sa température maximale ; et une unité de détermination de réussite ou d'échec (403) configurée pour déterminer si la partie de scellage (52) est une réussite ou un échec à travers l'image bidimensionnelle acquise par l'unité d'acquisition d'image (402), dans lequel l'unité de détermination de réussite ou d'échec (403) commande l'unité d'acquisition d'image (402) pour acquérir au moins une image bidimensionnelle à un moment t remplissant une condition ci-dessous :

$$0 < t < T/2.$$

**2.** Appareil d'inspection selon la revendication 1, dans lequel l'unité de réception de lumière (32) est agencée de manière à ne pas recevoir directement la lumière émise par l'unité électroluminescente (31) et passée à travers la partie de scellage (52) et la lumière émise par l'unité électroluminescente (31) et réfléchie par la partie de scellage (52).

**3.** Appareil d'inspection selon la revendication 1 ou 2, dans lequel l'unité électroluminescente (31) émet de la lumière vers la partie de scellage (52) en une seule fois et l'unité de réception de lumière (32) reçoit le rayonnement thermique de la partie de scellage (52) en une seule fois.

4. Appareil d'inspection selon une quelconque revendication précédente,
dans lequel l'unité électroluminescente (31) est une source de lumière surfacique dans laquelle des sources de lumière ponctuelles sont agencées dans des directions verticale et horizontale.

5. Appareil d'inspection selon une quelconque revendication précédente,
dans lequel l'image bidimensionnelle inclut de multiples images bidimensionnelles.

6. Appareil d'inspection selon la revendication 5,
dans lequel les multiples images bidimensionnelles sont de multiples images bidimensionnelles consécutives acquises par l'unité d'acquisition d'image (402) à un certain intervalle.

7. Appareil d'inspection selon une quelconque revendication précédente,

   dans lequel l'unité de détermination de réussite ou d'échec (403) commande l'unité d'acquisition d'image (402) pour acquérir au moins une image bidimensionnelle à un moment t remplissant une condition ci-dessous :

$$t < 0$$

   et exécute un processus de suppression du bruit sur la au moins une image bidimensionnelle acquise au moment t.

8. Procédé d'acquisition et d'inspection d'image comprenant :

   l'émission de la lumière par une unité électroluminescente (31) vers une partie de scellage (52) d'un emballage (50) incluant un matériau absorbant l'énergie lumineuse (51), la lumière présentant une longueur d'onde absorbée par le matériau absorbant l'énergie lumineuse (51) ;
   la réception du rayonnement thermique en provenance de la partie de scellage (52) par une unité de réception de lumière (32) sous la forme d'informations thermiques ; et
   l'acquisition d'informations thermiques bidimensionnelles sur la partie de scellage (52) sous la forme d'une image bidimensionnelle à travers l'unité de réception de lumière (32), dans lequel l'emballage est disposé entre l'unité électroluminescente (31) et l'unité de réception de lumière (32),
   **caractérisé en ce que** :
   l'acquisition inclut l'acquisition d'au moins une image bidimensionnelle à un moment t remplissant une condition ci-dessous :

$$0 < t < T$$

dans laquelle 0 est le moment auquel l'unité électroluminescente (31) émet de la lumière sur un côté de la partie de scellage (52), et T est le moment auquel la température de surface de l'autre côté de la partie de scellage (52) atteint une température maximale,
la détermination par une unité de détermination de réussite ou d'échec (403) pour savoir si la partie de scellage (52) est une réussite ou un échec à travers l'image bidimensionnelle acquise par l'unité d'acquisition d'image (402),
dans lequel l'unité de détermination de réussite ou d'échec (403) commande l'unité d'acquisition d'image (402) pour acquérir au moins une image bidimensionnelle à un moment t remplissant une condition ci-dessous :

$$0 < t < T/2.$$

FIG. 1

FIG. 2

FIG. 3

FIG. 4

**FIG. 5**

LIGHT EMITTING POINT

LIGHT EMITTING AREA INCLUDING ENTIRE SEALING PORTION

52

51

50

X

PACKAGE BEING CONVEYED

**FIG. 6**

LIGHT EMITTING POINT

LIGHT EMITTING AREA INCLUDING ENTIRE SEALING PORTION

52

51

50

PACKAGE BEING STOPPED

**FIG. 7**

LIGHT EMITTING LINE

LIGHT EMITTING AREA INCLUDING ENTIRE SEALING PORTION

52

51

50

X

PACKAGE BEING CONVEYED

FIG. 8

LIGHT
EMITTING
LINE

LIGHT EMITTING AREA
INCLUDING ENTIRE
SEALING PORTION

52

51

50

PACKAGE BEING STOPPED

FIG. 9

LIGHT
EMITTING
AREA

LIGHT EMITTING AREA
INCLUDING ENTIRE
SEALING PORTION

52

51

50

X

PACKAGE BEING CONVEYED

FIG. 10

LIGHT
EMITTING
AREA

LIGHT EMITTING AREA
INCLUDING ENTIRE
SEALING PORTION

52

51

50

PACKAGE BEING STOPPED

FIG. 11

LIGHT
RECEIVING
POINT

LIGHT RECEIVING
AREA INCLUDING
ENTIRE SEALING PORTION

52

51

50

X

PACKAGE BEING CONVEYED

FIG. 12

LIGHT
RECEIVING
POINT

LIGHT RECEIVING
AREA INCLUDING
ENTIRE SEALING PORTION

52

51

50

PACKAGE BEING STOPPED

FIG. 13

LIGHT
RECEIVING
LINE

LIGHT RECEIVING
AREA INCLUDING
ENTIRE SEALING PORTION

52

51

50

X

PACKAGE BEING CONVEYED

FIG. 14

LIGHT
RECEIVING
LINE

LIGHT RECEIVING
AREA INCLUDING
ENTIRE SEALING PORTION

52

51

50

PACKAGE BEING STOPPED

FIG. 15

LIGHT
RECEIVING
AREA

LIGHT RECEIVING
AREA INCLUDING
ENTIRE SEALING PORTION

52

51

50

X

PACKAGE BEING CONVEYED

FIG. 16

LIGHT
RECEIVING
AREA

LIGHT RECEIVING
AREA INCLUDING
ENTIRE SEALING PORTION

52

51

50

PACKAGE BEING STOPPED

FIG. 17

FIG. 18

FIG. 19

# FIG. 20

```
    ┌─41            ┌─42            ┌─43
 ┌─────────┐   ┌─────────┐   ┌─────────┐
 │   CPU   │   │   ROM   │   │   RAM   │
 └─────────┘   └─────────┘   └─────────┘
      │             │             │
 ─────┼─────────────┼─────────────┼─────
      │
      │  ┌─44
 ┌─────────┐
 │   HDD   │
 └─────────┘
```

4

# FIG. 21

4

CONTROLLER DEVICE

┌─402
2-DIMENSIONAL IMAGE ACQUISITION UNIT

┌─403
PASS-OR-FAIL DETERMINATION UNIT

┌─32
LIGHT RECEIVING UNIT

┌─401
CONTROLLER

┌─31
LIGHT EMITTING UNIT

┌─2
CONVEYER UNIT

# FIG. 22

# FIG. 23

EP 4 396 567 B1

# FIG. 24

# FIG. 25

ANOMALY
STATE

NORMAL
STATE

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020041840 A
- WO 2015140797 A
- US 2008302707 A
- JP 2017067549 A
- JP 2021141840 A